# EUROPEAN PATENT SPECIFICATION

(11) **EP 2 274 098 B1**
(45) Date of publication and mention of the grant of the patent: **25.12.2013**
(21) Application number: 09723731.7
(22) Date of filing: 27.03.2009
(51) Int. Cl.: B01L 3/02, G01N 1/02, G01N 35/10, B01L 3/00, B01L 3/14

(54) **MULTICAPILLARY SAMPLE PREPARATION DEVICES AND METHODS FOR PROCESSING ANALYTES**
MULTIKAPILLARE PROBENVORBEREITUNGSVORRICHTUNGEN UND VERFAHREN ZUR VERARBEITUNG VON ANALYTEN
DISPOSITIFS DE PRÉPARATION D ÉCHANTILLONS MULTICAPILLAIRES ET PROCÉDÉS DE TRAITEMENT D ANALYTES

(30) Priority: 28.03.2008 US 40544; 11.11.2008 US 113526
(43) Date of publication of application: 19.01.2011
(73) Proprietor: Biotix, Inc., San Diego, CA 92121 (US)
(72) Inventor: MOTADEL, Arta, San Diego CA 92109 (US)
(74) Representative: Vossius & Partner
(86) International application number: PCT/US2009/038688
(87) International publication number: WO 2009/121034

(56) References cited:
- WO-A1-2008/036091
- JP-A- 2004 237 142
- JP-B2- 3 759 910
- JP-T- 2000 515 066
- US-A1- 2004 038 316
- B. HALLMARK ET AL: "Hollow Microcapillary Arrays in Thin Plastic Films", ADVANCED ENGINEERING MATERIALS, vol. 7, no. 6, 1 June 2005 (2005-06-01), pages 545-547, XP55011846, ISSN: 1438-1656, DOI: 10.1002/adem.200400154

## Description

### Field of the Invention

The present invention relates to a polymer pipette tip extension device according to the appended claims.

### Background

Pipette tips are hollow tubes approximating a conical shape with openings at the upper and lower ends, often manufactured from an inert polymer material, and usually used to acquire, transport or dispense fluids. These fluids may or may not contain an analyte. Pipette tips are made in a number of sizes to allow accurate and reproducible liquid handling for volumes ranging from nanoliters to milliliters.

Pipette tips are used in conjunction with a pipette or pipettor. A pipettor is a device that, when attached to the upper end of a pipette tip (the larger opening end), applies negative pressure to acquire fluids, and applies positive pressure to dispense fluids. The lower or distal portion of a pipettor (typically referred to as the barrel) is placed in contact with the upper end of the pipette tip and held in place by pressing the barrel of the pipette into the upper end of the pipette tip. The combination then can be used to manipulate liquid samples via the application of negative pressure generated by the pipettor. Pipettors are available for manual or automated pipetting (e.g., automated pipetting by a robotic device). Pipette tips designed to reduce sample cross contamination, via the addition of various porous filters, are utilized in laboratories in manual and automated pipetting formats for carrying out such procedures as high throughput assays, for example.

Analytes can be isolated, purified or concentrated using a number of common laboratory techniques. Some methods make use of affinity or non-affinity binding on solid phase supports. Certain methods separate the analyte of interest from other analytes considered contaminants by reversibly binding and retaining the analytes of interest. Analytes can also be isolated, purified or concentrated using various types of chromatography. There are numerous methods of chromatography, examples of which include Ion exchange chromatography, affinity chromatography, High Pressure Liquid Chromatography (HPLC), Fast Protein Liquid Chromatography (FPLC) and chromatography using solid supports with or without coated and/or charged surfaces. These chromatographic methods can be performed on a large scale or in small volumes depending on the sample. Chromatography kits are commercially available which allow the processing of relatively small sample volumes, and which involve centrifugation of a sample, which passes the sample through the chromatographic matrix, followed by elution of the material of interest from the chromatographic matrix, also in conjunction with centrifugation. This method is rapid, relatively inexpensive and provides reasonable recovery of the analyte of interest.

WO 2008/036091 describes a multicapillary sample preparation device.

### Summary

Provided herein are liquid handling and sample preparation devices useful for isolation, purification, concentration and/or fractionation of analytes, such as nucleic acids and polypeptides, for example. Such devices include solid phase supports that bind to analytes by specific or non-specific interactions, which in certain embodiments, are non-coated capillary tubes arranged in a multicapillary array or bundle, or coated capillary tubes arranged in a multicapillary array or bundle. The solid phase supports are manufactured as a pipette tip extension constructed from a thermoplastic or polymer. The invention comprises a polymer pipette tip extension device according to claim 1, a method of attaching it to a pipette tip (claim 2) and a method for isolating an analyte using said polymer pipette tip extension device (claim 11).

Provided also herein is a polymer pipette tip extension device which comprises: a polymer housing comprising an outer surface and inner surface that defines a first void and a second void located at opposite termini of the housing, where: the cross section of the first void and the cross section of the second void are substantially circular and substantially parallel, the diameter of the first void is greater than the diameter of the second void, and the diameter of the first void and a portion of the housing contiguous with the first void are adapted to fit over the fluid delivery terminus of a pipette tip; and an insert in contact with a portion of the inner surface of the housing, where the insert comprises multiple capillary voids and where surfaces defining the capillary voids interact with an analyte under analyte interaction conditions. In certain embodiments, the polymer pipette tip extension device comprises an annular protrusion coextensive with the inner surface of the housing wall, and where a portion of the insert is in contact with the annular protrusion.

In certain embodiments, a pipette tip extension device comprises one or more annular protrusions, and in some embodiments, comprises two or more annular protrusions. In such embodiments, the insert, or a portion thereof, often is in contact with a portion of one or more of the annular protrusions.

In some embodiments, an insert of a pipette tip extension device comprises, or is constructed from, glass, etched glass, charged or uncharged plastic, etched plastic or a polymer. In certain embodiments, each capillary void in a insert is within a capillary tube. An insert in some embodiments comprises a bundle or array of capillary tubes. In certain embodiments, the volume of a pipette tip or pipette tip extension device ranges from 0 to 10 microliters, 0 to 20 microliters, 1 to 100 microliters, 1 to 200 microliters or from 1 to 1000 microliters. In certain embodiments, pipette tip devices can deliver nanoliter (1 to 999 nanoliters) or picoliter (1 to 999 picoliters) volumes.

The invention also in part provides a method for attaching a pipette tip extension device to a pipette tip, comprising: contacting the portion of the housing contiguous with the first void of the pipette tip extension device of any one of claims 4-9 with the fluid delivery terminus of a pipette tip, applying pressure between the pipette tip and the pipette tip extension device, and optionally twisting and the pipette tip extension device with reference to the pipette tip; whereby the pipette tip extension device housing is seated onto the fluid dispensing portion of the pipette tip. In certain embodiments, the pipette tip extension device is contacted with a fluid comprising an analyte.

In some embodiments, the analyte includes without limitation, a cell, a group of cells, a cell membrane, a cell membrane component (e.g., membrane lipid, membrane fatty acid, cholesterol, membrane protein), a saccharide, a polysaccharide, a nucleic acid (e.g., deoxyribonucleic acid (DNA), ribonucleic acid (RNA), protein nucleic acid (PNA)), a peptide and a polypeptide (e.g., a protein, a protein subunit, a protein domain).

In certain embodiments, an insert of a device described herein is in association with an analyte. An analyte often is reversibly associated with the insert, and in some embodiments, an analyte is irreversibly (e.g., covalently) associated with an insert. An analyte may be associated directly with a portion of the insert solid support (e.g., a DNAn analyte associated with a glass capillary inner surface) or may be associated with an intermediary molecule linked to the insert solid support (e.g., a protein analyte bound to a ligand covalently linked to the solid support surface of the insert).

The invention also in part provides methods for associating an analyte with a device described herein, which comprise: contacting an analyte with the insert of the device under conditions in which the analyte associates with the insert. Also featured in part are methods for isolating an analyte using a device described herein, which comprise: contacting an analyte with the device under conditions in which the analyte associates with the insert; optionally exposing the insert to conditions that selectively remove any non-analyte components associated with the insert; and exposing the insert to conditions that elute the analyte from the insert.

### Brief Description of the Drawings

It should be noted that for clarity and ease of illustration, these drawings are not made to scale and that in some instances various embodiments of the invention may be shown exaggerated or enlarged to facilitate an understanding of particular embodiments.

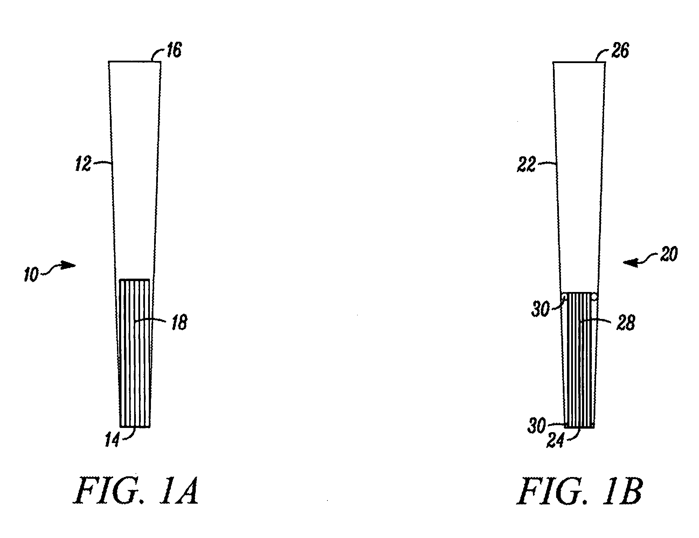

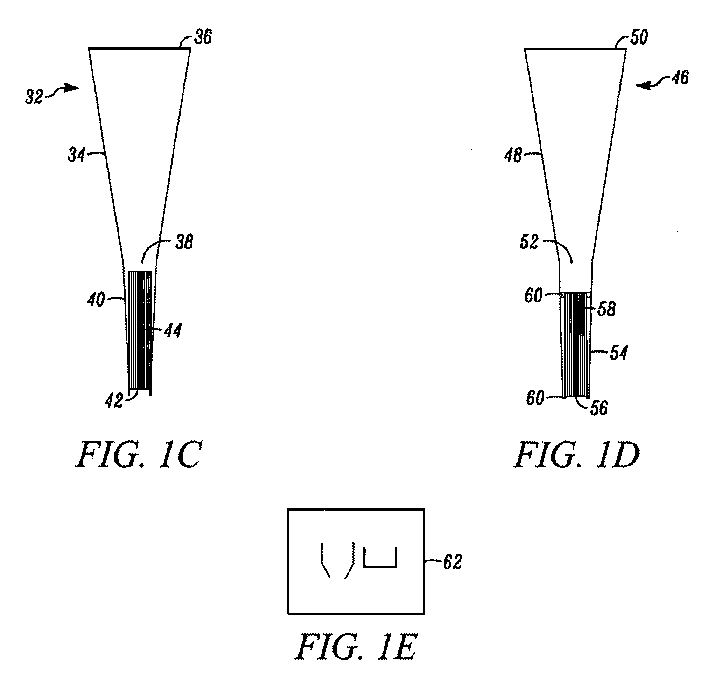

Figs. 1A and 1C show views of assembled pipette tip devices containing a compression fit insert plug. Figs. 1B and 1D show vertical views of assembled pipette tip devices containing an insert plug fitted to the pipette tip having sealing rings. Fig. 1E shows alternative vertical cross-sectional views of distal pipette tip end configurations usable with certain pipette tip devices.

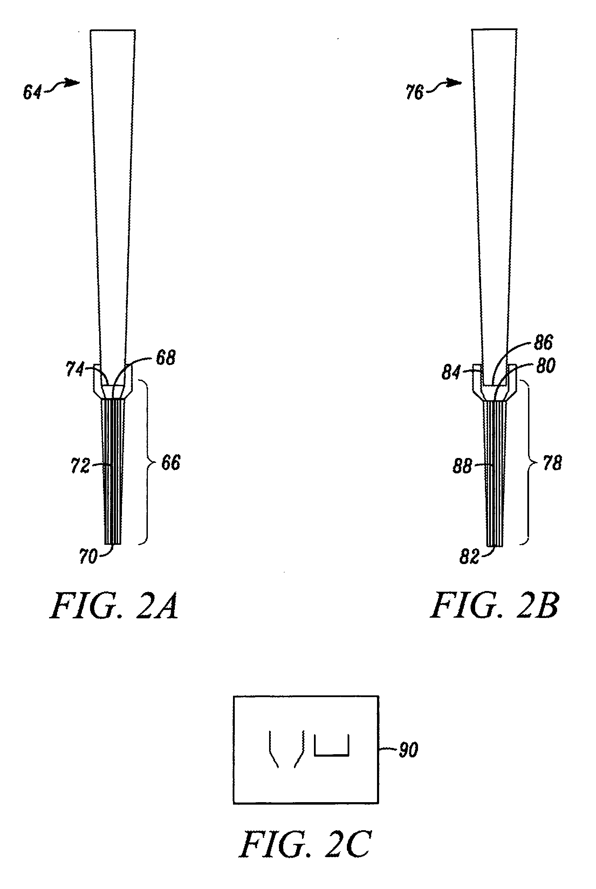

Figs. 2A and 2B show vertical views of a pipette tip device embodiment having a universal tip extender, which can be used to convert a standard pipette tip into a pipette tip device as described in embodiments presented herein. Fig. 2A shows a universal tip extender embodiment configured for compression fitting to the pipette tip. Fig. 2B shows a universal tip extender embodiment configured for fitting using sealing rings. Fig. 2C shows possible distal pipette tip configurations that can fit into the receiving end of a universal tip extender embodiment.

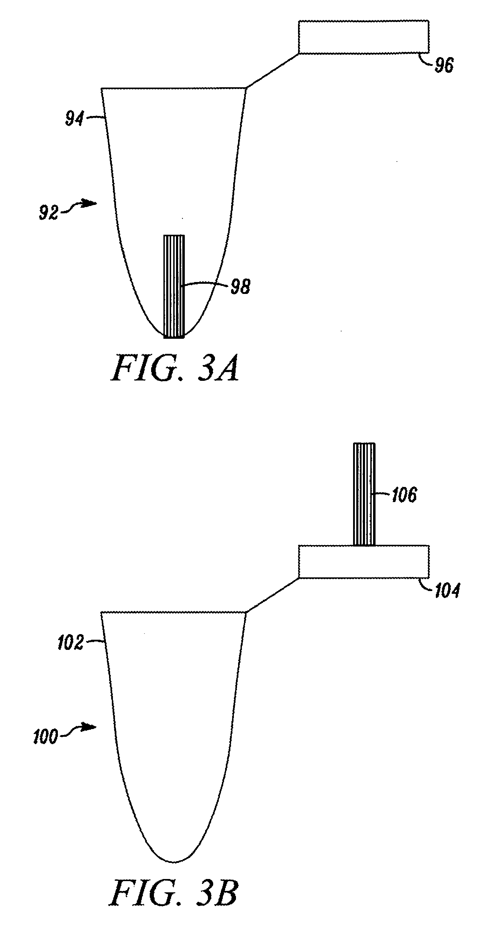

Figs. 3A and 3B show vertical cross-sectional views of a laboratory liquid handling tube. Fig. 3A shows a laboratory liquid handling tube with an insert plug in contact with the body of the tube. Fig. 3B shows a laboratory liquid handling tube with an insert plug in contact with the lid of the tube.

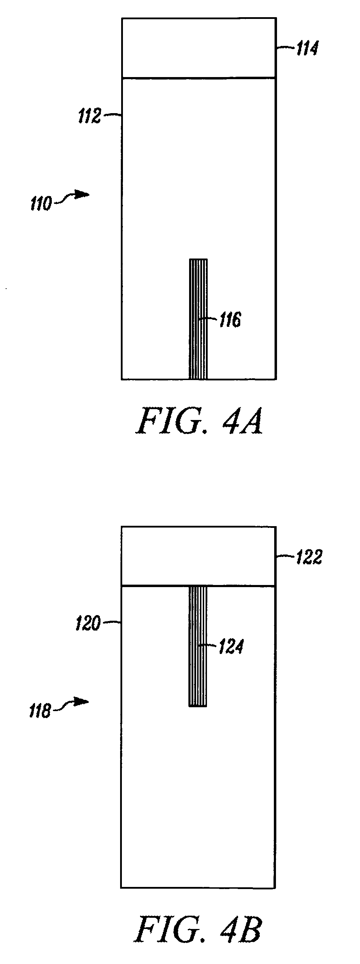

Figs. 4A and 4B show vertical cross-sectional views of a specimen container. Fig. 4A shows a specimen container with an insert plug in contact with the body of the container. Fig. 4B shows a specimen container with an insert plug in contact with the lid of the container.

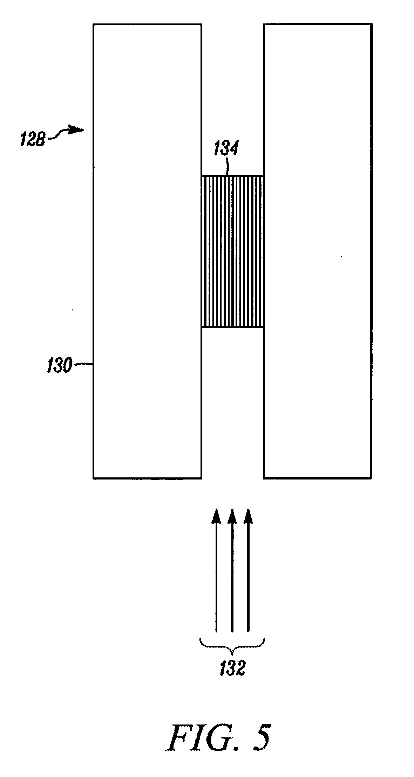

Fig. 5 is a block diagram of a generic microfluidic device containing an insert plug useful for isolation, purification or concentration and/or fractionation of analytes of interest, where the insert plug is in effective fluid communication with the biological sample material flowing through the microfluidic device. Examples of microfluidic devices that can be modified with the insert plugs described herein are described in U.S. Patent 6,168,948 to Andersen et al. or U.S. Patent 6,638,482 to Ackley et al.

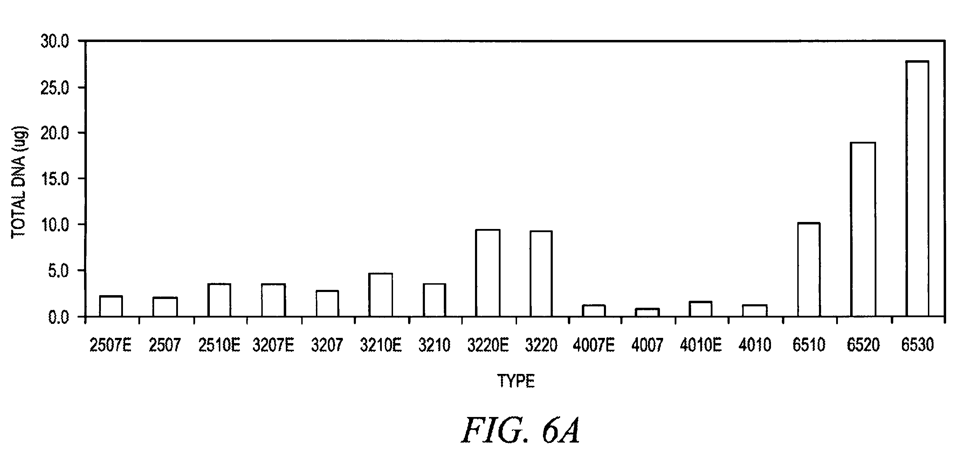

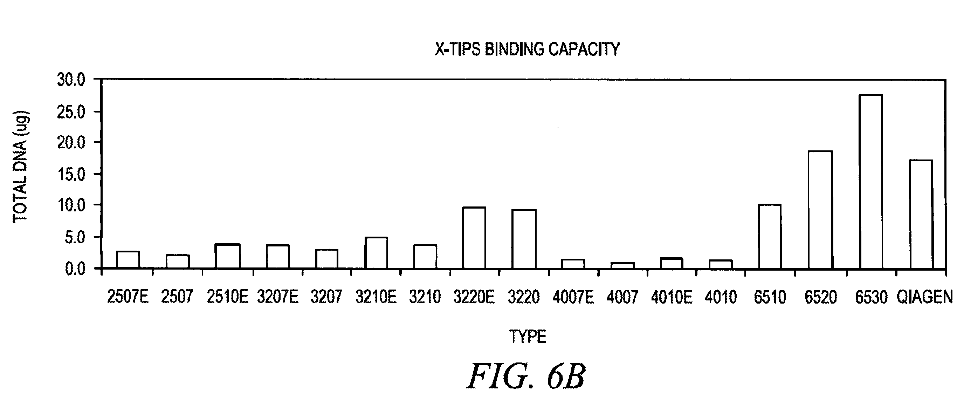

Figs. 6A and 6B graphically show results of experiments performed using polymer pipette tip devices described herein to determine binding capacity of various multicapillary insert plug configurations.

### Detailed Description

Polymer pipette tip devices, laboratory fluid handling tubes, specimen containers, and microfluidic devices described herein are useful for the isolation, purification, concentration and/or fractionation of analytes of interest from a variety of samples. Certain devices combine and provide the benefits of chromatography, isolation, purification, concentration and or fractionation without using centrifugation. Devices described herein can be utilized in manual or automated/robotic applications in volumes ranging from sub-microliter (e.g., nanoliter) to milliliter volumes. Certain devices have the additional benefit of being readily applicable to a variety of methodologies, including pipette tip-based isolation, purification and concentration and/or fractionation of analytes for ease of use and reduced cost.

Sample preparation devices provided herein are cost-effective, adaptable to many protocols, are not reliant on conventional chromatographic matricies, and do not require the use of centrifugation or other specialized equipment that can affect the quality of the material recovered. Thus, the sample preparation devices described herein are useful for isolation, purification, concentration and/or fractionation of analytes with improved sample recovery and improved sample quality.

In certain methods and devices used by the person of ordinary skill in the art, recovered analyte material may be damaged (e.g., nicked or sheared in the case of nucleic acids, denatured or incorrectly folded in the case of proteins) due to the mechanical forces exerted (e.g., heat transfer, acute centrifugal force, and air resistance). For example, an analyte may be structurally altered by the combination of centrifugation and the forced passage of the analyte through tortuous pathways formed by the chromatographic matrix, and/or by the methods necessary to elute the material of interest from the matrix to which it was bound. Therefore the impaired quality of the resultant biological samples extracted using certain methods may be undesirable to the user.

The structure of analytes prepared using devices described herein generally remain unaltered or less altered as compared to techniques in use by the person of ordinary skill in the art, and processes and devices described herein do not substantially modify the structures of the prepared analytes. For example, samples prepared using the sample preparation devices provided herein minimize nicking and shearing of nucleic acids resulting in greater recovery of intact nucleic acids, including chromatin, genomic DNA, and nucleic acids with certain secondary and tertiary structural conformations. In general, nucleic acids isolated by the sample preparation devices herein, will have a greater structural integrity for subsequent analysis. Additionally, use of the sample preparation devices provided herein will result in a greater yield of intact polypeptides and proteins with correct folding and intact structural integrity, also due to the advantages of using non-centrifugal means to isolate, purify, concentrate and/or fractionate the polypeptides or proteins.

Sample preparation devices provided herein are useful for efficient recovery of an analyte in a sample. In some embodiments, a sample preparation device provided herein may be used to recover about 30%, 40%, 50%, 60%, 70%, 80%, 90%, or more of an analyte recoverable from a sample. One of skill in the art will be aware of the need to balance the starting materials with the size of the sample preparation device for optimal recovery of the analyte of interest. To provide a wider range of options for the person of ordinary skill in the art, the sample preparation devices provided herein are configured in a number of different sizes to allow recovery of the material of interest from a wide range of starting materials and samples.

### Pipette Tip Devices

Pipette tips typically are used to acquire, transport or dispense fluids in various laboratory settings. Pipette tips can be used in large quantities in both medical and research settings where handling of large numbers of biological samples is necessary. Pipette tips can be used manually, where an operator uses either a single channel pipette or a multichannel pipette (more than one dispensing outlet, typically available in 2, 4 or 8 channel configurations), or pipette tips can also be used in automated or robotic applications. In these automated or robotic applications, the robotic devices can be configured to also use 1, 2, 4, 8, 96, 384 or 1536 channel pipettes. Pipettes with 96 or more channels generally are used in microtiter plate or array/chip applications where high throughput analysis of a large number of samples is required, for instance, in laboratories or medical clinics where PCR, DNA chip technology, protein chip technology (chip technology is also known as arrays), immunological assays (ELISA, RIA), or other large number of samples must be processed in a timely manner. One example of an automated or robotic device used for high throughput analysis is a device referred to as the Oasis LM (produced by Telechem International, Inc. Sunnyvale California 94089). This computer-driven biological workstation can be configured with up to 4 separate pipette tip heads with the ability to pipette 1, 8, 96, 384 or 1536 samples. The range of volumes is dependent on the particular head and pipette tip combination, and the volume range for the workstation is from 200 nanoliters to 1 milliliter. The workstation can operate all four pipette heads simultaneously.

Pipette tips are typically available in sizes that hold from 0 to 10 microliters, 0 to 20 microliters, 1 to 100 microliters, 1 to 200 microliters and from 1 to 1000 microliters While the external appearance of pipette tips may be different, pipette tips suitable for use with the embodiments presented herein generally have a continuous tapered wall forming a central channel or tube that is roughly circular in horizontal cross section. However, any cross-sectional geometry can be used providing the resultant pipette tip device provides suitable flow characteristics, and can be fitted to a pipette. Pipette tips useable with the embodiments described herein will taper from the widest point at the top-most portion of the pipette tip (pipette proximal end or end that fits onto pipette), to a narrow opening at the bottom most portion of the pipette tip (pipette distal or end used to acquire or dispel samples). In certain embodiments, a pipette tip wall can have two or more taper angles. While the inner surface of the pipette tip often forms a tapered continuous wall, the external wall may assume any appearance ranging from an identical continuous taper to a stepped taper or a combination of smooth taper with external protrusions. The upper-most outer surface of commonly available pipette tips often are designed to aid in pipette tip release by the presence of thicker walls or protrusions that interact with a pipette tip release mechanism found in many commercially available pipette devices. Additional advantages of the externally stepped taper are compatibility with pipette tip racks from any manufacturer. The thicker top-most portion of certain pipette tips also allows for additional rigidity and support such that additional pressure can be applied when pressing the pipette into the opening of the pipette tip to secure the pipette tip on the pipette, thus ensuring a suitable seal. The bore of the top-most portion of the central channel or tube will be large enough to accept the barrel of a pipette apparatus of appropriate size. As most pipette apparatus are capable of being used with universal pipette tips made by third party manufacturers, one of skill in the art would be aware of the different pipette tip sizes used with pipettes of different volumetric ranges. Therefore one of skill in the art appreciates that a pipette tip designed for use with a pipette used for handling samples of 1 to 10 microliters generally would not fit on a pipette designed for handling samples of up to 1000 microliters. The design and manufacture of standard pipettes and pipette tips is well known in the art, and injection molding techniques often are utilized.

The term "pipette tip device" as used herein refers to a pipette tip suitable for isolation, purification, concentration and/or fractionation of biological samples, where the device often is constructed of standard, commercially available pipette tips of any size or shape into which an insert can be inserted. The pipette tip housing often is manufactured from a polymer, which can be of any convenient polymer type or mixture for fluid handling (e.g., polypropylene, polystyrene, polyethylene, polycarbonate). A pipette tip device can be provided as a RNase, DNase, and/or protease free product, and can be provided with one or more filter barriers. Filter barriers are useful for preventing or reducing the likelihood of contamination arising from liquid handling, and sometimes are located near the pipette tip terminus that engages a manual or robotic pipettor in certain embodiments.

An "insert" as used herein often comprises a solid phase that can interact with an analyte. The term "solid support" or "solid phase" as used herein refers to an insoluble material with which an analyte can be associated, directly or indirectly. Inserts provided herein generally include multicapillary structures, where the inner surface of each capillary generally serves as a solid phase support. Examples of materials for solid phase supports include without limitation glass, etched glass, charged or uncharged plastic, etched plastic, charged etched plastic and coated surfaces. Glass capillary tubes are provided in certain multicapillary inserts embodiments, and recent advances in polymer science has enabled the development of a number of polymer plastics, that not only exhibit low retention and suitable flow characteristics, but have also been determined to act themselves as chromatographic agents. Published U.S. Patent Application 2006/020188A1 to Marcus et al. shows that polypropylene materials can be used as a solid phase, for example. Thus, any suitable polymer can be used in multicapillary inserts.

Multicapillary inserts are known, and examples of multicapillary bundles are described in U.S. Patent No. 7,166,212 issued on January 23, 2007, supra. A multicapillary bundle can be formed by piercing a monolithic element (rod, tube, etc.) with multiple capillaries, for example. In another example, a multicapillary bundle can be formed by shrink-wrapping plastic, metal, or metal oxides around capillary tubes to form the bundle. Thus, multicapillary inserts sometimes are referred to as multicapillary bundles or arrays. The assembled insert (e.g., monolithic element and capillary tubes) contains voids. The voids are the channels that are created by the capillary tubes within the outer boundary of the monolithic element, or the voids can also be the channels created between the external surfaces of adjacent capillary tubes. Dimensions of multicapillaries in an insert can be of any convenient dimensions for interacting with an analyte and for use with a pipettor. The inner diameter of capillaries in a multicapillary insert can be, for example, from about 0.1 micrometers to about 100 micrometers, and in certain embodiments, about 0.1, 0.5, 1, 5, 10, 50 or 100 micrometers. The length of each capillary in a multicapillary insert can be, for example, 0.1 millimeter to about 10 centimeters, and in certain embodiments, about 0.1, 0.5, 1, 5, 10, 50 or 100 millimeters. A multicapillary insert can have any suitable number of capillaries for liquid handling and analyte extraction, and can include without limitation, about 100, 200, 300, 400, 500, 600, 700, 800, 900, 1000, 1250, 1500, 1750, 2000, 2250, 2500, 2750, 3000, 3250, 3500, 3750, 4000, 4250, 4500, 4750, 5000, 6000, 7000, 8000, 9000 or 10,000 capillaries. Non-limiting examples of multicapillary inserts are presented in Table 1.

**Table 1. Examples of multicapillary inserts**

| **MCTip** | **No of cpls** | **S mm2** | **S mm2 per mm** | **V mm3** | **V mm3 per mm** | **S/V** | **Cross mm2** | **Pressure drop % per mm** |
|---|---|---|---|---|---|---|---|---|
| 1001 | 4447 | 140 | 140 | 0.35 | 0.35 | 400 | 0.34 | 100 |
| | | | | | | | | |
| 2507 | 4681 | 2590 | 370 | 16.1 | 2.30 | 160 | 2.30 | 15.2 |
| 2510 | 4681 | 3700 | 370 | 23.0 | 2.30 | 160 | 2.30 | 15.2 |
| 3207 | 4447 | 3150 | 450 | 24.5 | 3.50 | 130 | 3.57 | 9.76 |
| 3210 | 4447 | 4500 | 450 | 35.0 | 3.50 | 130 | 3.57 | 9.76 |
| 3220 | 4447 | 9000 | 450 | 70.0 | 3.50 | 130 | 3.57 | 9.76 |
| 4007 | 1387 | 1225 | 175 | 12.3 | 1.75 | 100 | 1.74 | 20.0 |
| 4010 | 1387 | 1750 | 175 | 17.5 | 1.75 | 100 | 1.74 | 20.0 |
| 6510 | 3367 | 6900 | 690 | 111 | 11.10 | 60 | 11.17 | 3.13 |
| 6520 | 3367 | 13800 | 690 | 222 | 11.10 | 60 | 11.17 | 3.13 |
| 6530 | 3367 | 20700 | 690 | 333 | 11.10 | 60 | 11.17 | 3.13 |

In Table 1, column heading MCTip refers to the reference number assigned to a given insert configuration. The reference number contains information regarding both the length of the insert and the average diameter of the capillary opening or void (e.g. MCTip 1001 refers to a capillary bundle that has an average capillary opening or void diameter of 10 microns and is 1 mm in length, while MCTip 6530 refers to a capillary bundle that has an average capillary void of 65 microns and a length of 30 mm). Column heading No of cpls refers to the number of capillary channels in that particular insert configuration. Column heading S refers to the surface area of a particular insert. Column heading V refers to the volume of that particular insert configuration. Column heading Pressure drop% per mm is the calculated pressure drop expressed as a percent with reference to the length of that particular insert bundle. The other columns are values calculated from the columns described.

The inserts presented in Table 1 can be placed in pipette tips to form pipette tip devices, in a housing designed to fit on the end of a pipette tip to form a pipette tip extension device, in laboratory liquid handling tubes or specimen cups to form liquid handling tube devices, or in microfluidic devices, when placed in fluid communication with a capillary flow channel.

The capillaries and insert can be of any cross-sectional geometry (circular, oval, polygonal, (e.g., hexagon, octagon), and the like) such that the insert can be fitted within a pipette tip. The maximum diameter of an insert often is equal to or greater than the diameter of the fluid discharge void of a pipette tip, and the length of an insert generally is no longer than the vertical length of a pipette tip. In certain embodiments, the diameter of an insert cross section is about 0.01 to about 20 millimeters (e.g., about 0.01, 0.05, 0.10, 0.50, 1, 2, 3, 4, 5, 6, 7, 8, 9, 10, 11, 12, 13, 14, 15, 16, 17, 18, 19 or 20 millimeter diameter), sometimes about 0.1 millimeters to about 10 millimeters, and at times about 1.1, 2.3, 3.2 or 3.1 millimeters. In some embodiments, the length of an insert is about 0.1 to about 100 millimeters (e.g., 0.1, 0.5, 1, 2, 3, 4, 5, 6, 7, 8, 9, 10, 15, 20, 30, 40, 50, 60, 70, 80, 90 or 100 millimeter length).

The cross section shape of the insert can depend on the cross section shape of each capillary and on the number of capillaries utilized to manufacture the insert. For example, if a rod or tube with a circular cross-section is used, the resultant multicapillary bundle can approximate the same circular cross-sectional shape. Thus, inserts formed using monolithic elements sometimes assume the cross-sectional shape of the monolithic element used as the boundary. In embodiments where a greater number of cylindrical capillaries are utilized, the cross section of the insert sometimes is polygonal. Also, the smaller the diameter of the capillary tubes used, the closer the cross-sectional shape can be to the true cross-sectional shape of the boundary monolithic element. In the case of larger diameter capillary tubes, the cross-sectional shape of the insert sometimes is circular due to the boundary, however, the perimeter of the capillary tubes inside the circular boundary can assume a shape closer to a multi-sided polygon. This feature is due to the packing density that can be achieved using boundary monolithic elements and capillary tubes of varying sizes. A general rule of thumb is the smaller the capillaries inserted into the monolithic element, the closer the cross-sectional shape will be to a circle. Alternative capillary cross sectional shapes can provide a greater packing density due to the "stacking" of the alternatively shaped capillaries within the outer monolithic boundary element.

A solid phase or solid support (e.g., multicapillary insert) can comprise a material that can associate with an analyte. The solid phase may be coated (e.g., the surface of the solid phase may be coated) or charged with a material that associates with an analyte. The material may associate with an analyte by specific or non-specific interactions. Examples of non-specific interactions include without limitation hydrophobic (e.g., C18-coated solid support and tritylated nucleic acid), electrostatic, ionic, van der Walls and polar (e.g., "wetting" association between nucleic acid/polyethylene glycol) interactions and the like. Examples of specific interactions include binding pair interactions, for example, such as affinity binding pair interactions. Examples of binding pair interactions include without limitation antibody/antigen, antibody/antibody, antibody/antibody fragment, antibody/antibody receptor, antibody/protein A or protein G, protein/ligand, hapten/anti-hapten, biotin/avidin, biotin/streptavidin, polyhistidine/bivalent metal (e.g., copper), glutathione/glutathione-S-transferase, folic acid/folate binding protein, vitamin B12/intrinsic factor, nucleic acid/complementary nucleic acid (e.g., DNA, RNA, PNA) interactions and the like. Antibodies include without limitation IgG, IgM, IgA, IgE, or an isotype thereof (e.g., IgG₁, IgG₂ₐ, IgG_{2b} or IgG₃). Other coatings include without limitation carbohydrates, lipids, glycosylated proteins or polypeptides, aromatic hydrocarbons, and the like. A solid phase also may include a coating that covalently links to an analyte. Non-limiting examples of molecules that can covalently link to analytes of interest include chemical reactive group/complementary chemical reactive group pairs (e.g., sulfhydryl/maleimide, sulfhydryl/haloacetyl derivative, amine/isotriocyanate, amine/succinimidyl ester, and amine/sulfonyl halides), and the like. Examples of specific and non-specific association agents affinity binding agents and methods for linking them to a solid phase are described in U.S. Patent Application publication no. 2007/0017870, published on January 25, 2007. A coating in some embodiments renders uniform or substantially uniform the inner diameter of capillaries in a multicapillary structure (e.g., aliphatic, aromatic, organoelement and inorganic moieties described in U.S. Patent No. 7,166,212, issued January 23, 2007, entitled "Multicapillary column for chromatography and sample preparation," to Belov et al.). In certain embodiments, a solid phase is coated with one or more materials (e.g., a material that renders the inner diameter of capillaries substantially uniform and a material that specifically or non-specifically associates with polypeptides). A solid phase in certain embodiments may be naked and not include a coated material (e.g., a glass or etched glass solid phase that associates with nucleic acid). Capillaries in an insert may be coated with beads (e.g., silica gel or beads, C-18 coated beads), particles or like structures, which may or may not comprise a material that can associate with an analyte. Coated materials may be in association with a solid phase by covalent and/or non-covalent interactions.

The term "analyte" as used herein refers to an agent that can associate with a material or insert of a device described herein. An analyte may be one or more chemicals, organic molecules, inorganic molecules and the like, in certain embodiments. An analyte sometimes is from a biological sample, and can be an analyte or biological reagent. A biological sample is any sample derived from an organism or environment, including without limitation, tissue, cells, a cell pellet, a cell extract, or a biopsy; a biological fluid such as urine, blood, saliva or amniotic fluid; exudate from a region of infection or inflammation; a mouth wash containing buccal cells; cerebral spinal fluid or synovial fluid; environmental, archeological, soil, water, agricultural sample; microorganism sample (e.g., bacterial, yeast, amoeba); organs; and the like. An analyte includes without limitation a cell, a group of cells, an isolated cell membrane, a cell membrane component (e.g., membrane lipid, membrane fatty acid, cholesterol, membrane protein), a saccharide, a polysaccharide, a nucleic acid (e.g., deoxyribonucleic acid (DNA), ribonucleic acid (RNA), protein nucleic acid (PNA)), a peptide and a polypeptide (e.g., a protein, a protein subunit, a protein domain) and the like. A sample sometimes is processed to liberate analytes of interest before an analyte is contacted with a device described herein. For example, cells can be lysed using methods well known in the art before the sample is contacted with a device herein.

Referring to Fig. 1A, a polymer pipette tip device 10 has a continuous and tapered polymer wall 12 defining a first void 14 and a second void 16 located at opposite termini, where the cross section of the first void and the cross section of the second void are substantially circular and substantially parallel, and the diameter of the first void is less than the diameter of the second void. Polymer pipette tip device 10 contains an insert 18 in contact with a portion of the inner surface of the polymer wall 12 between the first void 14 and second void 16, and where the insert 18 has voids and is constructed from a material that binds to a nucleic acid under nucleic acid binding conditions or insert 18 may alternatively contain a material that binds to a polypeptide under polypeptide binding conditions.

Referring to Fig. 1B, a polymer pipette tip device 20 is provided that has a continuous and tapered polymer wall 22 defining a first void 24 and a second void 26 located at opposite termini, where the cross section of the first void 24 and the cross section of the second void 26 are substantially circular and substantially parallel, and the diameter of the first void 24 is less than the diameter of the second void 26. Polymer pipette device 20 has annular protrusion 30, coextensive with the inner surface of the wall, and where the cross section of the annular protrusion is substantially parallel to the cross section of the first void and the second void. Fig. 1 B shows an upper and lower annular protrusion, however it is envisioned that pipette tip device 20 can function equally well with one or more annular protrusions. The wall of pipette tip device 20 and the annular protrusion are constructed from the same polymer. Pipette tip device 20 contains insert 28 in contact with the annular protrusion 30, or in some embodiments more than one annular protrusion. Insert 28 of pipette tip device 20 has voids and is constructed from a material that binds to a nucleic acid under nucleic acid binding conditions or insert 28 may alternatively contain a material that binds to a polypeptide under polypeptide binding conditions.

Referring to Fig. 1C, a polymer pipette tip device 32 is provided that has a continuous and tapered first wall 34 defining a first 36 void and a second void 38 located at opposite termini, wherein the cross section of the first void 36 and the cross section of the second void 38 are substantially circular and substantially parallel, and the diameter of the first void 36 is greater than the diameter of the second void 38. Polymer pipette tip device 32 also has a continuous and tapered second wall 40 defining the second void 38 and a third void 40 located at opposite termini, where the cross section of the second void 38 and the cross section of the third void 42 are substantially circular and substantially parallel, and the diameter of the second void 38 is greater than the diameter of the third void 42. The second wall 40 of pipette tip device 32 is coextensive with the first wall 34 and the first wall 34 and second wall 40 are constructed from the same polymer, and the taper angle of the second wall 40 is less than the taper angle of the first wall 34. Pipette tip device 32 also contains an insert 44 in contact with a portion of the inner surface of the second wall 40 between the second void 38 and the third void 42, where the insert comprises voids and where insert 44 has voids and is constructed from a material that binds to a nucleic acid under nucleic acid binding conditions or insert 44 may alternatively contain a material that binds to a polypeptide under polypeptide binding conditions.

Referring now to Fig. 1D, a polymer pipette device 46 is provided that has a continuous and tapered first wall 48 defining a first 50 void and a second void 52 located at opposite termini, where the cross section of the first void 50 and the cross section of the second void 52 are substantially circular and substantially parallel, and the diameter of the first void 50 is greater than the diameter of the second void 52. Polymer pipette tip device 46 also has a continuous and tapered second wall 54 defining the second void 52 and a third void 56 located at opposite termini, wherein the cross section of the second void 52 and the cross section of the third void 56 are substantially circular and substantially parallel, and the diameter of the second void 52 is greater than the diameter of the third void 56. The second wall 40 of pipette device 46 is coextensive with the first wall 48 and the first wall 48 and second wall 54 are constructed from the same polymer, and the taper angle of the second wall 54 is less than the taper angle of the first wall 48. Polymer pipette tip device 46 also has an annular protrusion 60, coextensive with the inner surface of the wall, where the cross section of the annular protrusion is substantially parallel to the cross section of the first void and the second void. Fig. 1B shows an upper and lower annular protrusion, however it is envisioned that pipette tip device 46 can function equally well with one or more annular protrusions 60. The wall of pipette tip device 46 and the annular protrusion(s) 60 are constructed from the same polymer. Pipette tip device 46 contains insert 58 in contact with the annular protrusion 60, or in some embodiments more than one annular protrusion. Insert 58 of pipette tip device 46 has voids and is constructed from a material that binds to a nucleic acid under nucleic acid binding conditions or insert 58 may alternatively contain a material that binds to a polypeptide under polypeptide binding conditions.

The cross-section of a void is defined as the shape the horizontal cross section of an opening assumed. For a pipette tip roughly circular in shape as defined by the wall of the pipette tip that forms the central axis or channel, a horizontal cross section of the void would be seen as substantially circular when viewed form the top. The cross section of the void will be substantially parallel to the horizontal cross section of any other portion of the pipette tip that is not the void, although the diameters of the cross sections may be different.

The term "protrusion" as used herein refers to a bump or protruding material raised from the surface of the wall in a localized region. Such protrusions solve a problem in the art for retaining an insert in a pipette tip, and can retain an insert in a pipette tip by friction or compression in certain embodiments. A protrusion may be present in any one or a plurality of a variety of shapes, including without limitation, an annular protrusion or a dimple. An annular protrusion can be of any suitable cross section for retaining an insert in a pipette tip, including without limitation, a semispherical, semi-oval or v-shaped cross section. A dimple also may be of any suitable cross section for retaining an insert in a pipette tip, including without limitation a circular, oval, square, rectangular, rhomboid, hexagonal or octagonal cross section. The protrusion can be co-extensive with the wall in certain embodiments. For example, a co-extensive protrusion can be made from the same mold at the same time as the pipette tip, where there is no separation between the underlying and surrounding wall of the pipette tip and the protrusion. The protrusion may not be co-extensive with the wall in certain embodiments. In the latter embodiments, for example, an annular protrusion may be provided by an o-ring (e.g., a rubber or plastic o-ring). One or more annular protrusions may be present in a pipette tip, at any convenient location along the vertical axis of a pipette tip (i.e., the axis running from the larger pipette tip void to the smaller void) for retaining an insert. A pipette tip may include only one protrusion, which sometimes is located near the fluid discharge void of the pipette tip. Some pipettes include two protrusions, each contacting a terminus of the insert (i.e., the distance between the two protrusions along the vertical axis of the pipette tip is defined by the length of the insert in this example).

As used herein "second wall is coextensive with the first wall" refers to the first and second walls being of one piece, by being molded as one piece, being joined together to form a continuous wall without gaps or breaks, or by being co-extruded, for example. One of skill in the art will understand that other methods that result in two walls appearing and acting as a single wall can also be used, and are therefore included herein.

As used herein "first wall and second wall are constructed from the same polymer" refers to a process where the walls are formed as one continuous wall, by using molten polymer in a mold, or by being pressed or extruded as a single entity from polymer stock, for example.

As used herein "insert in contact with a portion of the inner surface of the second wall" refers to the insert being pressed into place, and often immobilized by frictional force or compression between the outer boundary of the insert and the inner surface of the pipette tip wall (as shown in Figs. 1C and 1D). The second wall, having a smaller angle from vertical compared to the first wall (i.e., a lower taper angle), facilitates a friction fit for the insert, and thus solves a problem in the art for retaining an insert in a pipette tip.

Referring to Figs. 1A and 1C, inserts 18 and 44 are placed in polymer pipette tip devices 10 and 32 by compression fitting. That is, inserts 18 and 44 are pressed into place with sufficient force that the inserts cannot be easily dislodged due to the combination of compression, deformation of surfaces and co-efficient of friction being great enough to keep the insert in place. Alternatively, inserts 18 and 44 can also be held in place by adhesion to the inner polymer surface of the pipette tip using biologically and/or chemically inert adhesives, or by a combination of compression fitting and adhesives. Sufficient force is defined here as the minimal force required to fit an insert securely without causing damage to the pipette tip or the insert. It will be appreciated that application of heat to the pipette tips prior to fitment of the insert may be successfully used to further reduce the amount of force required to achieve a secure fit of the insert.

Referring to Figs. 1B and 1D, inserts 28 and 58 are placed in polymer pipette tip devices 20 and 46 by pressing inserts 28 and 58 past one or more annular rings 30 and 60 such that annular ring(s) 30 and 60 are slightly deformed around inserts 28 and 58, creating a seal. Fitment of inserts 28 and 58 in this manner would allow the use of smaller cross-sectional diameter inserts, while still allowing sealed, secure fitment. Additionally, the use of thinner annular ring(s) 30 and 60 would allow a certain amount of flexibility thus reducing the force required to fit an insert due to the ability of thinner annular rings to bend and deform and thus allow the formation of a secure seal with less required input pressure to seat the insert. It will be appreciated that application of heat to the pipette tips prior to fitment of the insert may be successfully used to further reduce the amount of force required to press the insert past the annular rings, achieving a securely sealed fit.

Referring to Figs. 1A, 1B, 1C, and 1D, the distal opening (first void 14 and 24 of Figs. 1A and 1B respectively, third void 42 and 56 of Figs. 1C and 1D, respectively) of polymer pipette tip device 10, 20, 32 and 46 can be configured to have different size and/or shaped openings 62 as illustrated in Fig. 1E, where two possible non-limiting examples out of many possible distal end configurations are presented.

### Polymer Pipette Tip Extension Device

As used herein "pipette tip extension device" refers to the invention, which does not involve placing an insert into a pipette tip, but rather is a prefabricated polymer housing that contains an insert and a pipette tip adaptor at the topmost portion of the device, into which a pipette tip of the appropriate size is placed and secured in place by applying downward pressure to the pipette tip. "Polymer housing" refers to the plastic material used to contain the multicapillary insert. The polymer housing can be of any convenient polymer or polymer mixture for fluid handling (e.g., polypropylene, polystyrene, polyethylene, polycarbonate). A pipette tip extension devices can be provided as a RNase, DNase, and/or protease free product, and can be provided with one or more filter barriers. Filter barriers are useful for preventing or reducing the likelihood of contamination arising from liquid handling, and sometimes are located near the pipette tip adaptor component in certain embodiments.

A pipette tip extension device includes a pipette tip adaptor component that can mate with a pipette tip fluid discharge end by a suitable connection, such as a friction, compression or lock fit, for example. The pipette tip adaptor component can include any suitable structure for mating the pipette tip, including without limitation, one or more barbs, protrusions (e.g., annular protrusions, described above), dimples (described above), o-rings, and luer lock structures. As used herein, "the diameter of the first void and a portion of the housing contiguous with the first void are adapted to fit over the fluid delivery terminus of a pipette tip" refers to the portions of and the manner in which the pipette tip and the pipette tip extension device are mated for the combinatorial device, and is illustrated in Figs. 2A and 2B. The diameter of the portion of the polymer housing contiguous with the first void sometimes is marginally larger than, sometimes the same as, and sometimes marginally smaller than the diameter of the pipette tip fluid emission end, and is configured such that once mated, the pipette tip and pipette tip extension device are not dislodged during pipetting of fluids. A user may dispose of the pipette tip - extender combination after use, or may remove the extender from the pipette tip after use, in certain embodiments.

An insert can be retained in a pipette tip extension device by any suitable retaining structure or method. Non-limiting examples of structures that retain an insert include, without limitation, one or more protrusions in contact with the inner surface of the pipette tip extension device wall (e.g., annular protrusions and dimples described above) one or more contiguous walls having different wall angles from vertical (e.g., described above). An insert also can be retained in an extension device by deforming a portion of a wall of the device in contact with the insert, including without limitation, heat (e.g., partially melting the wall) and mechanical crimping.

Referring to Fig. 2A, in some embodiments, a polymer pipette tip extension device 64 is provided that has a polymer housing 66 with an outer surface and inner surface that defines a first void 68 and a second void 70 located at opposite termini of the housing. The cross section of the first void 68 and the cross section of the second void 70 are substantially circular and substantially parallel, the diameter of the first void 68 is greater than the diameter of the second void 70, and the diameter of the first void 68 and a portion of the housing 66 contiguous with the first void 68 are adapted to fit over the fluid delivery terminus of a pipette tip 74. Polymer pipette tip extension device 64 contains an insert 72 in contact with a portion of the inner surface of the housing 66, where the insert 72 contains voids and where the insert 72 is constructed from a material that binds to a nucleic acid under nucleic acid binding conditions or insert 72 may alternatively contain a material that binds to a polypeptide under polypeptide binding conditions.

Referring to Fig. 2B, in some embodiments, a polymer pipette tip extension device 76 is provided that has a polymer housing 78 with an outer surface and inner surface that defines a first void 80 and a second void 82 located at opposite termini of the housing. The cross section of the first void 80 and the cross section of the second void 82 are substantially circular and substantially parallel and the diameter of the first void 80 is greater than the diameter of the second void 82. Pipette tip extension device 76 also contains annular protrusion 84, coextensive with the inner surface of the housing wall 78, and a portion of the housing 78 contiguous with the first void 68 are adapted to fit over the fluid delivery terminus of a pipette tip 86. Fig. 2B shows an upper and lower annular protrusion, however it is envisioned that pipette tip extension device 76 can function equally well with one or more annular protrusions. Polymer pipette tip extension device 76 contains insert 88 in contact with a portion of the inner surface of the housing 78, where the insert 88 contains voids and where the insert 88 is constructed from a material that binds to a nucleic acid under nucleic acid binding conditions or insert 88 may alternatively contain a material that binds to a polypeptide under polypeptide binding conditions.

Referring to Figs. 2A and 2B, in pipette tip extension devices 64 and 76 presented above, the fluid delivery terminus of the pipette tip 74 and 86 can be configured to have different size and/or shaped openings 90 as illustrated in Fig. 2C, where 2 possible non-limiting examples out of many possible fluid delivery termini configurations are presented.

The pipette tip extension devices 64 and 76 are attached to the pipette tip by contacting the pipette tip with the pipette tip device, and applying a downward pressure or force to the pipette to force the fluid dispensing portion of the pipette tip 74, 86 into the pipette tip extension device housing 64, 78 so that the fluid dispensing portion of the pipette tip 74, 86 makes contact with the inner wall of the pipette tip extension device. Optionally a twisting motion may be employed during the downward pressure to further help seat the fluid dispensing portion of the pipette tip 74, 86 in the pipette tip extension device. After mating the pipette tip to the pipette tip extension device, the combination may optionally be contacted with a fluid such that the pipette tip extension device voids 70 and 82 are placed in contact with the liquid.

Pipette tip extension devices 64 and 76 are adapted to fit the receiving pipette tip, by pressure fitting the pipette into the pipette tip extension device, in certain embodiments. This amounts to a compression fitting in which a sufficient amount of force is applied such that the pipette tip and the pipette tip extension device cannot be readily dislodged due to the combination of compression, deformation of surfaces and coefficient of friction being great enough to keep the pipette tip in contact with the pipette tip extension device. Sufficient force is defined here as the minimal force required to securely fit a pipette tip extension device to a pipette tip without causing damage to the pipette tip or the pipette tip extension device. Pipette tip extension device 76, containing annular protrusion will require greater force to fit the pipette tip due to the annular protrusions, but consequently will offer a more secure fitting, that will require greater force to remove, thereby ensuring that accidental removal by jarring or bumping is minimized. It is also envisioned that additional alternative methods of securing the pipette tip extension device, such as the use of a luer lock device, or bayonet type mounting devices are usable for secure fitting of the pipette tip extension device, and therefore are considered alternative means of securing the device in place.

### Pipette Tips and Pipette Tip Extension Devices Having Filters

Some pipette tips and pipette tip extension devices include one or more filter elements, the latter of which sometimes are referred to herein as "filter inserts," in addition to a multicapillary insert. A filter insert sometimes is located at or near a pipette tip terminus that engages a dispensing device, and in some embodiments, the filter is located at or near the distal end of a pipette tip through which fluid is drawn and/or dispensed.

A filter insert sometimes is located at or near a pipette tip terminus that takes in and emits fluid. In the latter devices, filter inserts can trap or block entry of molecules other than an analyte of interest, referred to hereafter as "contaminants" (e.g., microbial wall material). The filter insert can be constructed from any material suitable for blocking or trapping contaminants, including, without limitation, polypropylene and the like. The multicapillary insert can interact with an analyte in the fluid not blocked and not trapped by the filter element.

Thus, described herein is a pipette tip comprising a first terminal void and a second terminal void, a filter insert and a multicapillary insert, where (i) the cross sectional area of the first terminal void is smaller than the cross sectional area of the second terminal void; (ii) the filter insert, or a portion thereof, is located in the pipette tip interior; and (iii) the terminus of the filter insert closest to the first terminal void is located at subtantially the same location as the first terminal void, or is near the first terminal void. In certain devices the terminus of the filter insert closest to the first terminal void is within about 0 to about 5 millimeters of the first terminal void. The terminus of the filter insert is located outside the pipette tip in certain embodiments, and sometimes the filter insert in its entirety, including the terminus of the filter insert closest to the first terminal void, is located in the pipette tip interior.

In some embodiments, a filter may be constructed from beads, fibers, a matrix or an array of material, a solid or semi-solid plug, or a combination thereof. In certain embodiments a filter may be constructed from polyester, cork, plastic, silica, gels, or a combination thereof. In some embodiments a filter may be porous, non-porous, hydrophobic, hydrophilic or a combination thereof. In some embodiments, a filter and inner surface of a pipette tip or extender may interstitially define a number of vertically-oriented pores. A filter may seal against the inner surface of a pipettor in some embodiments, where a filter is located near the pipettor insertion end of a pipette tip or extender. The pores may be distributed according to a pore distribution which defines varying pore sizes within the filter that are dependent upon the volume defined by the inner surface of the pipette tip and the cross-sectional horizontal density of the filter material. The pore size of a filter may be of any size that aids in the function of the filter. In some embodiments, a filter may have a maximum pore size be ten micrometers or less or three micrometers or less. In certain embodiments, a filter may have a pore size of about 10, 9, 8, 7, 6, 5, 4, 3, 2, 1, 0.5, or 0.05 micrometers.

Also provided are methods for using such tips. In certain embodiments, a pipette extender comprising a filter element located at or near the fluid-emitting void of a pipette tip is first utilized to trap contaminants in a fluid containing an analyte of interest, and then a second pipette extender, containing a multicapillary insert in its interior that can interact with the analyte, is contacted with the fluid under conditions in which the analyte interacts with the multicapillary insert. In such embodiments, fluid containing the analyte is contacted with the multicapillary insert in the second pipette extender. The filter insert often is located closer to the fluid-emitting void in the second pipette tip than the multicapillary insert. The analyte then can be eluted from the multicapillary insert. In some embodiments, the second pipette extender also includes a filter insert located closer to the fluid-emitting void than the multicapillary insert. In other methods a fluid containing an analyte is contacted with a pipette tip comprising a filter insert and a multicapillary insert that can interact with the analyte without first trapping contaminants with another pipette tip containing only a filter insert located near the fluid-emitting void.

### Laboratory Liquid Handling Tube and Container Devices

Many laboratory or clinical procedures require collecting, manipulating, preparing, or fractionating samples in tubes or containers of differing sizes. Microcentrifuge tubes (e.g., EPPENDORF tubes) often are utilized due to their availability in convenient sizes (250 microliter tubes, 500 microliter tubes, 1.5 milliliter tubes and 2 milliliter tubes), their sturdy design (capable of withstanding centrifugation, heating, cooling to temperatures below -70 degrees C, resistance to many solvents and chemicals) and availability as RNase and DNase free products with low liquid retention. These tubes also are available in configurations which have a locking lid affixed to the tube body by a hinge co-extensive from the tube body, or with a standard screw cap top. The tubes also are available in various colors and with specialized surfaces on the outside of the tube for labeling. While these tubes have gained acceptance and use as a preferred laboratory liquid handling tube, the usefulness of these tubes can be limited to volumes of 2 milliliters or less. Many laboratories and medical clinics also have a requirement for collecting, storing and/or processing samples greater than 2 milliliters in size or samples that may contain solids. In these instances specimen containers are used. Specimen containers are typically made from the same materials used for microcentrifuge tubes and so have many of the same advantageous properties. Typically these tubes have either a screw cap top, or a lid that that snaps securely in place to the body of the specimen container to provide a leak resistant or leak proof seal. The lids can be made of the same or a different material as the body. The specimen containers can have a tapered body or a non-tapered body. They have the additional added benefit of being able to handle liquid, solid or a combination of liquid and solid samples of larger sizes. Specimen containers (also sometimes referred to as specimen cups) are also available in a variety of sizes (about 15 milliliters, 20 milliliters, 4 ounces (about 125 milliliters), 4.5 ounces, 5 ounces, 7 ounces, 8 ounces (about 250 milliliters) and 9 ounces), allowing collection, storage, and/or processing of samples of over 300 milliliters. One of skill in the art understands that new products which perform the equivalent function and products of differing sizes are developed continuously. Therefore one of skill in the art will understand that containers not listed herein, but equivalent in function and of possibly different sizes are envisioned as being equivalent and therefore usable. Laboratory liquid handling tubes and specimen containers may be utilized to contain a biological sample (e.g., urine, semen, blood, plasma, sputum, feces, mucous, vaginal fluid, spinal fluid, brain fluid, tears cells and the like).

Laboratory liquid handling tubes and specimen containers are manufactured from a variety of materials. Common materials used for the manufacture of these types of tubes and containers are polypropylene, polyethylene, and polycarbonate. Other thermoplastics or polymers may also be used. Many of the commercially available tubes and containers come pre-sterilized or with guarantees of being RNase, DNase, and protease free. Any material that has good chemical or solvent resistance, has low liquid retention (i.e., made of hydrophobic materials or coated to be hydrophobic), is safe for the handling of analytes (RNase, DNase, and protease free), and that can withstand heating and extreme cooling is suitable for use.

A limitation of standard laboratory liquid handling tubes and specimen containers is that neither type of container reduces the number of steps required to isolate, purify, concentrate and/or fractionate analytes. One example would be preparation of protein or nucleic acid from a cell lysate. Regardless of the size of the sample, multiple tubes and processing steps are required to arrive at the final protein or nucleic acid material desired. This involves transferring the sample between different tubes or containers after each step or series of steps. Each transfer potentially loses sample or potentially introduces a contaminant that can alter recovery or destroy the samples completely. Thus, the present devices can reduce the number of steps and transfers required to arrive at a final analyte of interest, and thus save time, money and reduce sample loss.

Figs. 3A and 4A, refer to laboratory liquid handling tube device 92 and laboratory specimen container device 110. Laboratory liquid handling tube device 92 and laboratory specimen container device 110 have a body 94, 112 and a lid 96, 114. Laboratory liquid handling tube device 92 and laboratory specimen container device 110 also contains an insert 98, 116 affixed to an inner surface of the body, wherein the insert 98, 116 comprises voids and wherein the insert 98, 116 is constructed from a material that binds to a nucleic acid under nucleic acid binding conditions or insert 98, 116 may alternatively contain a material that binds to a polypeptide under polypeptide binding conditions.

Figs. 3B and 4B, show laboratory liquid handling tube device 100 and laboratory specimen container device 118. Laboratory liquid handling tube device 100 and laboratory specimen container device 118 have a body 102, 120 and a lid 104, 122.

Laboratory liquid handling tube device 100 and laboratory specimen container device 118 also contains an insert 106, 124 affixed to an inner surface of the lid 104, 122, wherein the insert 106, 124 comprises voids and wherein the insert 106, 124 is constructed from a material that binds to a nucleic acid under nucleic acid binding conditions or insert 106, 124 may alternatively contain a material that binds to a polypeptide under polypeptide binding conditions.

Referring now to Figs. 3A, 3B, 4A, and 4B, one of skill in the art will appreciate that each of the devices illustrated in these figures represent similar devices with differences being found in the configuration of the lids and attachment points of the inserts. Referring now to Figs. 3A and 3B. In Fig. 3A and 3B, lid 96, 104 are affixed to the body of the embodiment by a hinge-like attachment co-extensive with both the body 94, 102 and lid 96, 104 of laboratory liquid handling tube 92, 100. In Fig 4A and 4B, lid 114 and 122 are of a screw cap or snap cap configuration and are therefore separate and distinct from the body of the embodiment. It should also be noted that the cap and lid in this arrangement may also be made from different materials. It will be appreciated by one of skill in the art that all shapes, sizes and lid configurations of microcentrifuge tubes or specimen containers can be utilized in manufacture of the laboratory liquid handling tube device or specimen container devices described herein.

As used herein, "insert affixed" refers to the manner in which the insert is permanently affixed to the body or lid of the liquid handling tube or container. One method of affixing the insert is to add an additional amount of polymer material to the base of the inside of the tube or to the inside of the lid, followed by heating or partially melting the additionally added material and placing the insert into the heated or partially melted polymer material. Alternative methods would be to use a chemically and/or biologically inert adhesive to affix the insert to either the lid or the base of the inside of the tube or container, or the use of plasma.

The laboratory liquid handling tube or container devices can be used in a variety of manners. In the case of whole cells or intact tissue, the tubes can be used to perform cell lysis followed by the isolation, purification, concentration and/or fractionation of an analyte of interest in a single step. Cell lysis procedures and reagents are commonly known in the art and may generally be performed by chemical, physical, or electrolytic lysis methods. For example, chemical methods generally employ lysing agents to disrupt the cells and extract the nucleic acids from the cells, followed by treatment with chaotropic salts. Physical methods such as freeze/thaw followed by grinding, the use of cell presses and the like are also useful if intact proteins are desired. High salt lysis procedures are also commonly used. These procedures can be found in Current Protocols in Molecular Biology, John Wiley & Sons, N.Y., 6.3.1-6.3.6 (1989). Following cell lysis using methods not requiring high salt, the analyte of interest can be directly eluted from the insert. For high salt lysis, it may be necessary to dilute the sample into a larger volume to affect binding of the analyte of interest, prior to sample isolation. Alternatively, increasing salt concentration may be required to elute the analyte of interest from the insert. Once the appropriate volume and salt concentration of sample are achieved, the tubes or containers can be gently agitated to ensure maximal binding, followed by elution in a minimal volume of elution buffer. The concentrations and volumes of buffers will be dependent on the species of molecule of interest and the volume of starting material on which lysis was performed.

### Microfluidic Devices

Microfluidic devices of increasing sophistication and ability have been developed and are commercially available. Advances in semiconductor manufacturing and nanotechnology have been translated to the fabrication of micromechanical structures such as micropumps, microvalves, and microelectrophoretic systems. U.S. Patent 6,168,948 to Andersen et al. or U.S. Patent 6,638,482 to Ackley et al., are examples of microfluidic devices that include miniature chambers and flow passages. Due to the increasing sophistication of these microfluidic devices, it is now possible to take whole cells and process them for the purpose of isolating various analytes of interest completely within these miniature devices. Combining microfluidic devices with the multicapillary inserts described herein, allow further advances in the in-device purification and fractionation of analytes. Additionally, with microcapillary tubes of the proper specificity, specific polypeptides or gene sequences, as well as protein/protein, protein/DNA, and/or RNA/DNA complexes may be isolated. In certain microfluidic devices, more than one microcapillary insert may be used simultaneously to allow concurrent fractionation of multiple, and different, analytes of interest.

Provided herein is a microfluidic device having more than one multicapillary array or bundle, each bundle being specific for a particular species of analyte (e.g., protein, DNA, RNA, lipids, carbohydrates, or specific polypeptides or proteins or gene sequences depending on the manner in which the solid phase support is prepared), such that multiple independent isolation, purification, concentration and/or fractionation procedures can be carried out at the same time in the same microfluidic device.

Fig. 5, shows a microfluidic device 128. Microfluidic device 128 has within housing 130 micromechanical structures capable of performing various biological procedures (cell lysis, extractions, microelectrophoresis, and the like) as well as a capillary flow channel 132. Capillary flow channel 132 will transport fluid containing either cells or various analytes, depending on the procedures that have already been performed. Microfluidic device 128 also contains at least one insert 134 in fluid communication with capillary flow 132, such that the liquid flowing through capillary channel 132 passes through the one or more inserts 134. Insert(s) 134 are placed within the capillary flow channel in a manner that allows easy access and removal for sample isolation and insert replacement. Insert 134 of microfluidic device 128 contains voids and is constructed from a material that binds to a nucleic acid under nucleic acid binding conditions or insert 134 may alternatively contain a material that binds to a polypeptide under polypeptide binding conditions.

It will be appreciated that in a microfluidic device configured as a miniature bioreactor, that continuous isolation of molecules of interest can be performed by removing inserts, configured for specific molecule or sequence isolation, that have been in fluid communication with the capillary channel and replacing them with identically configured inserts. The insert just removed can be processed to release the desired molecule, and then the entire insert can be reused (if removal of the desired molecule doesn't alter the binding specificity of the insert), while processing the molecules isolated on a different insert. Additionally, an even more powerful fractionation scheme can be envisioned where separate and distinct molecules are isolated simultaneously by the use of appropriately configured inserts.

### Processing Analytes

The inserts used in the devices described herein are useful for isolation, purification, concentration and/or fractionation of analytes, including without limitation peptides, polypeptides, proteins, nucleic acids and cells, and other analytes can also be isolated with the appropriately configured inserts.

The terms "isolated", "isolating" or "isolation" as used herein refer to material removed from its original environment (e.g., the natural environment if it is naturally occurring, or a host cell if expressed exogenously), and thus is altered "by the hand of man" from its original environment. The terms "isolated", "isolating" or "isolation" and "purified", "purifying" or "purification" as used herein with reference to molecules does not refer to absolute purity. Rather, "purified", "purifying" or "purification" refers to a substance in a composition that contains fewer substance species in the same class (e.g., nucleic acid or protein species) other than the substance of interest in comparison to the sample from which it originated. "Purified", "purifying" or "purification", if a nucleic acid or protein for example, refers to a substance in a composition that contains fewer nucleic acid species or protein species other than the nucleic acid or protein of interest in comparison to the sample from which it originated. "Concentrated", "concentrating", or "concentration" refers to the act of increasing the "molarity" of a substance species (e.g., nucleic acid or protein species), without also substantially increasing the molarity of any salts, buffering agents or other chemicals present in the sample solution. "Fractionated", "fractionating" or "fractionation" as used herein refers to the act of separating similar or dissimilar substance species using a chromatographic approach, for example, fractionation of nucleic acids extracted from a cell, where the object of fractionation is to remove protein or RNA, but maintain DNA, and sometimes the total population of DNA. The DNA can be fractionated from other substance species, but the result is different from purification because there are not fewer substance species in the same class.

As used herein, the term "polypeptide" refers to a molecular chain of amino acids and does not refer to or infer a specific length of the amino acid chain. Thus peptides, oligopeptides, and proteins are included within the definition of polypeptide. This term is also intended to include polypeptides that have been subjected to post-expression modifications such as glycosylations, acetylations, phosphorylations, and the like. As used herein, the term "protein" refers to any molecular chain of amino acids that is capable of interacting structurally, enzymatically or otherwise with other proteins, polypeptides, RNA, DNA, or any other organic or inorganic molecule.

As used herein, "nucleic acid" refers to polynucleotides such as deoxyribonucleic acid (DNA) and ribonucleic acid (RNA). The term should also be understood to include, as equivalents, derivatives, variants and analogs of RNA or DNA made from nucleotide analogs, single (sense or antisense) and double-stranded polynucleotides. It is understood that the term "nucleic acid" does not refer to or infer a specific length of the polynucleotide chain, thus nucleotides, polynucleotides, and oligonucleotides are also included in the definition. Deoxyribonucleotides include deoxyadenosine, deoxycytidine, deoxyguanosine and deoxythymidine. For RNA, the uracil base is uridine. Different forms and types of nucleic acids can be contacted by devices described herein, including without limitation, genomic, plasmid, circular, linear, hairpin, ribozyme, antisense, triplex, short heteronuclear RNA (shRNA), short inhibitory RNA (siRNA) and inhibitory RNA (RNAi).

As used herein "material that binds to a nucleic acid" refers to any organic or inorganic molecules that can specifically or non-specifically bind to a nucleic acid. Included in the category "organic or inorganic molecule" are peptides, polypeptides, proteins, proteins subjected to post-translational modification, other nucleic acids, nucleic acids containing modified nucleotides, and antibodies. The material bound to nucleic acid sometimes is present in a sample from which the nucleic acid is being processed, such as cellular components that bind to nucleic acid.

As used herein, "analyte association conditions" or "analyte interaction conditions" refers to conditions under which an analyte associates with a solid support in an insert. The term "associates" as used herein refers to covalent, non-covalent, specific and/or non-specific interactions between the analyte and a solid phase. The association often is reversible, in some embodiments is irreversible, and sometimes the association is a binding interaction. Analyte association conditions in some embodiments are specific temperatures and/or concentrations of certain components that facilitate association of an analyte to a solid support in the insert, including without limitation, salt, buffer agent, carrier molecule and chaotrope concentration. As used herein, the term "wash" refers to exposing a solid support to conditions that remove materials from the solid support that are not the analyte(s) of interest. As used herein, the term "elute" refers to exposing a solid support to conditions that de-associate the analyte(s) of interest from the solid support.

In certain embodiments, a nucleic acid (e.g., DNA) is associated with a glass solid support (e.g., silica) in an insert, and several association conditions are known in the art (e.g., World Wide Web URL biology-web.nmsu.edu/nish/Documents/reprints %20&%20supplemental/DNA%20Isolation%20Procedures.pdf). For example, it is known that DNA binds to silica under conditions of high ionic strength and/or high chaotrope concentration. High DNA adsorption efficiencies are shown to occur in the presence of a buffer solution having a pH at or below the pKa of the surface silanol groups.

Analyte binding conditions sometimes are categorized as being of low stringency or high stringency. Devices described herein can be utilized at elevated temperatures for use with stringent hybridization protocols. An example of stringent hybridization conditions is hybridization in 6X sodium chloride/sodium citrate (SSC) at about 45°C, followed by one or more washes in 0.2X SSC, 0.1% SDS at 50°C. Another example of stringent hybridization conditions are hybridization in 6X sodium chloride/sodium citrate (SSC) at about 45°C, followed by one or more washes in 0.2X SSC, 0.1% SDS at 55°C. A further example of stringent hybridization conditions is hybridization in 6X sodium chloride/sodium citrate (SSC) at about 45°C, followed by one or more washes in 0.2X SSC, 0.1% SDS at 60°C. Another stringent hybridization conditions are hybridization in 6X sodium chloride/sodium citrate (SSC) at about 45°C, followed by one or more washes in 0.2X SSC, 0.1 % SDS at 65°C. Certain stringency conditions are 0.5M sodium phosphate, 7% SDS at 65°C, followed by one or more washes at 0.2X SSC, 1% SDS at 65°C.

Nucleic acid binding can also occur by other specific or nonspecific means. Non-limiting examples of nucleic acid binding conditions are high salt binding (high ionic conditions as in the case of non-specific interactions with glass) where DNA binding occurs in the range of 0.75M sodium chloride to 1.25M sodium chloride, followed by elution with concentrations of sodium chloride ranging from 1.25M to 1.6M; low salt binding (low ionic conditions as in the case for C18 coated solid supports) where non specific hydrophobic binding occurs in aqueous buffers with concentrations in the range of 0 to 0.1 Molar (M) salts, and where the bound nucleic acids can be eluted with increasing gradients of organic mobile phase, like acetonitrile, up to 30%, up to 40%, 50%, 60%, 70%, 80%, and even 90%, for example. The exact binding and elution conditions being dependent on the size and sequence of the nucleic acid. Further nucleic acid binding conditions available in the protocols of the following commercially available catalogs: PureLink quick plasmid miniprep kit (Invitrogen, Cat. No. K2100-10 or K2100-11), Wizard plus SV Minipreps DNA purification System (Promega, Cat. No. A1330 or A1460), QIAprep Spin Miniprep Kit (Qiagen, Cat. No. 27104 or 27106), and GenElute plasmid kids (Cat. No. PLN-50, PLN-70, PLN-250 and PLN-350).

A bind-wash-elute procedure can be utilized to process a nucleic acid from a sample using a device described herein. In certain embodiments, nucleic acids are adsorbed to a solid support comprising silica in the presence of one or more chaotropic agents, which remove water from hydrated molecules in solution. Examples of chaotropic agents include without limitation guanidinium salts (e.g., guanidinium hydrochloride and guanidium thiocyanate) and urea, and can be utilized at concentrations of 0.5M to 7M in certain embodiments. Polysaccharides and proteins do not adsorb to the solid support and are removed. After a wash step, nucleic acids are eluted under low- or no-salt conditions in small volumes, ready for immediate use without further concentration. Nucleic acid may first be isolated from a sample source (e.g., cells) by methods known to the person of ordinary skill in the art. For example, an alkaline lysis procedure may be utilized. The latter procedure traditionally incorporates the use of phenol-chloroform solutions, and an alternative phenol-chloroform-free procedure involving three solutions can be utilized. In the latter procedures, solution 1 can contain 15mM Tris, pH 8.0; 10mM EDTA and 100 ug/ml Rnase A; solution 2 can contain 0.2N NaOH and 1% SDS; and solution 3 can contain 3M KOAc, pH 5.5.

A bind-wash-elute procedure also can be utilized with solid phase inserts comprising silica derivatized with a positively charged moiety. In certain embodiments, a silica material having a high density of diethylaminoethyl (DEAE) groups can be used to isolate nucleic acids. Isolation is based on the interaction between negatively charged phosphates of the nucleic acid backbone and positively charged DEAE groups on the surface of the resin. Other charged groups can be utilized, including without limitation diethyl-(2-hydroxypropyl)aminoethyl, trimethylamine and the like. The salt concentration and pH conditions of the buffers used in each step control binding, wash stringency, and elution of nucleic acids. Combinations of pH conditions and buffers are described at World Wide Web address URL qiagen.com/Plasmid/AnionExchangeResin.aspx. For example, a salt concentration (e.g., NaCl) in the range of about 0.4M to about 2.0M may be used with a pH in the range of about 6.0 to about 9.0 for extraction of DNA or RNA, where a higher salt concentration is utilized with a lower pH solution.

As described previously, solid phases support can be functionalized with affinity-binding reagents, such as specific gene sequences, specific peptide sequences, antibodies and other organic or inorganic molecules. Conditions for associating analytes with such functionalized solid phases are known in the art. Conditions for washing and eluting analytes from such supports also are known in the art. For example, polypeptides can be eluted by increasing amounts of organic solvents, such as acetonitrile (e.g., about 30%, 40%, 50%, 60%, 70%, 80%, 90%). One of ordinary skill in the art will appreciate that the exact binding and elution conditions will be dependent on the size and sequence of the analyte of interest and the solid phase to which it is associated.

Analytes processed using devices described herein can be detected by a method known to the person of ordinary skill in the art. Methods for detecting polypeptides are well known (e.g., Coomassie blue, Bradford reagent) and methods for detecting nucleic acids also are known. For example, measuring the intensity of absorbance of a DNA solution at wavelengths 260 nm and 280nm is used as a measure of DNA purity. DNA absorbs ultraviolet (UV) light at 260 and 280 nm, and aromatic proteins absorbs UV light at 280 nm; a pure sample of DNA has the 260/280 ratio at 1.8 and is relatively free from protein contamination. A DNA preparation that is contaminated with protein will have a 260/280 ratio lower than 1.8. In another example, a DNA sample processed using a device described herein can be amplified using a technique known in the art, such as polymerase chain reaction (PCR) and transcription mediated amplification (TMA) processes, for example. Quantitative PCR (Q-PCR) processes are known in the art for determining the amount of a particular DNA sequence in a sample. Also, DNA can be quantified by cutting with a restriction enzyme, electrophoresing products in an agarose gel, staining with ethidium bromide or a different stain and comparing the intensity of the DNA with a DNA marker of known concentration. Nucleic acid also can be quantified by diphenylamine (DPA) indicators by spectrometric detection at 600 nm and use of a standard curve of known nucleic acid concentrations.

### Examples

### Comparative Example 1: Isolation of Nucleic Acid Using Multicapillary Pipette Tips

A stock plasmid DNA solution of 6 milligram per milliliter was prepared. The stock solution was diluted 60 fold to100microgram per milliliter, using solutions for cell lysis as provided in a plasmid DNA preparation kit (Qiagen). The buffer solutions are labeled P1, P2, and P3. These solutions were used, as per the manufacturer's procedure, to ensure that even though purified plasmid DNA was being used to determine binding capacity, salts and other chemicals were consistent with the commercial procedure, thus enabling a direct test of binding capacity in lysis buffer containing salts. The final volume of plasmid DNA solution (working solution) prepared was 15 milliliters of 100 microgram per milliliter. Five-hundred microliters of the 100 microgram per milliliter working solution (a total of 50 micrograms of plasmid DNA) was applied to each tip pipette tip device. The plasmid DNA was bound, washed and eluted using a commercially available DNA isolation kit (i.e., Cat. No. 27104 Miniprep Kit; Cat. No. 27106 Miniprep Kit (Qiagen)). Duplicate trials for each tip were run. The results are presented in Figs. 6A and 6B, and the DNA recovery and purity as determined by absorbance are presented in Table 2 below.

**Table 2**

| Tip | DNA Total ug | | DNA total ug | | |
|---|---|---|---|---|---|
| | Sample 1 | ratio (260 / 280) | Sample 2 | ratio (260 / 280) | Avg yield (ug) |
| 2507 E | 2.2 | 1.88 | 2.4 | 1.8 | 2.3 |
| 2507 | 2.3 | 1.69 | 1.7 | 1.64 | 2.0 |
| 2510 E | 3.8 | 1.67 | 3.4 | 1.78 | 3.6 |
| 3207 E | 3.4 | 1.71 | 3.5 | 1.76 | 3.5 |
| 3207 | 2.7 | 1.64 | 2.7 | 1.7 | 2.7 |
| 3210 E | 4.7 | 1.72 | 4.5 | 1.67 | 4.6 |
| 3210 | 3.6 | 1.82 | 3.3 | 1.78 | 3.5 |
| 3220 E | 9.7 | 1.63 | 9.4 | 1.62 | 9.5 |
| 3220 | 9.1 | 1.61 | 9.5 | 1.58 | 9.3 |
| 4007 E | 1.3 | 1.61 | 1.3 | 1.58 | 1.3 |
| 4007 | 1.1 | 1.54 | 0.8 | 1.65 | 0.9 |
| 4010 E | 1.5 | 1.74 | 1.8 | 1.74 | 1.6 |
| 4010 | 1.2 | 1.64 | 1.6 | 1.52 | 1.4 |
| 6510 | 9.4 | 1.42 | 11.1 | 1.41 | 10.3 |
| 6520 | 17.6 | 1.43 | 20.3 | 1.36 | 18.9 |
| 6530 | 29.2 | 1.29 | 26.4 | 1.29 | 27.8 |
| spin column | 16.8 | 1.83 | 18.4 | 1.79 | 17.6 |

Multicapillary features shown in Table 2 are similar to those for Table 1. The "E" designation (e.g., "2507 E" vs. "2507") indicates that glass in the capillary is etched. Presented in Figs. 6A and 6B are graphs of the total DNA binding capacity of each tip. The X-axis of both graphs represents total DNA bound. The Y-axis of each graph indicates the particular tip device tested. The tip designations are identical to those provided in Table 1, therefore a direct comparison to physical characteristics can be made to DNA binding capacity. As shown in Figs. 6A and 6B tips, 3220E, 3220, 6510, 6520, and 6530 show the greatest amount of DNA bound, with 6530 capturing over 50% of the DNA applied in the trial. It should be noted that the level of binding seen herein, is in the presence of salt concentrations used for cell lysis, and additional DNA binding might be apparent in lower salt concentrations. Of particular note is the additional entry in the lower graph in Figs. 6B. The same amount of DNA was applied to a spin column provided in a plasmid preparation kit (Qiagen). Comparison of the bar graph for 6530 with the bar graph for the spin column shows the advantage of tips over the spin columns using the same procedures and buffers provided in the spin column kit.

## Claims

1. A polymer pipette tip extension device which comprises:
a polymer housing comprising an outer surface and inner surface that defines a first void and a second void located at opposite termini of the housing, wherein:
the cross section of the first void and the cross section of the second void are substantially circular and substantially parallel,
the diameter of the first void is greater than the diameter of the second void, and
the diameter of the first void and a portion of the housing contiguous with the first void are adapted to fit over the fluid delivery terminus of a pipette tip; and
an insert in contact with a portion of the inner surface of the housing, wherein the insert comprises multiple capillary voids and wherein surfaces defining the capillary voids interact with an analyte under analyte interaction conditions.

2. The device of claim 1, which comprises an annular protrusion coextensive with the inner surface of the housing wall, and wherein a portion of the insert is in contact with the annular protrusion.

3. The device of claim 1 or 2, wherein the insert comprises glass, etched glass, charged or uncharged plastic, etched plastic or a polymer.

4. The device of any one of claims 1 to 3, wherein each capillary void is within a capillary tube.

5. The device of claim 4, wherein the insert comprises a bundle or array of capillary tubes.

6. The device of any one of claims 1 to 5, wherein in use, the analyte is reversibly associated with the insert.

7. The device of any one of claims 1 to 6, wherein the analyte is a nucleic acid, polypeptide or cell.

8. The device of any one of claims 1 to 7, wherein the volume of the pipette tip extension device ranges from 0 to 10 microliters, 0 to 20 microliters, 1 to 100 microliters, 1 to 200 microliters or from 1 to 1000 microliters.

9. A method of attaching a pipette tip extension device to a pipette tip comprising:
contacting the portion of the housing contiguous with the first void of the pipette tip extension device of any one of claims 1 to 5 with the fluid delivery terminus of a pipette tip,
applying pressure between the pipette tip and the pipette tip extension device, and
optionally twisting and the pipette tip extension device with reference to the pipette tip;
whereby the pipette tip extension device housing is seated onto the fluid dispensing portion of the pipette tip.

10. A method for associating an analyte with a device of any one of claims 1 to 8, which comprises: contacting an analyte with the insert of the device under conditions in which the analyte associates with the insert.

11. A method for isolating an analyte using a device of any one of claims 1 to 8, which comprises:
contacting an analyte with a device of any one of claims 1 to 8 under conditions in which the analyte associates with the insert;
optionally exposing the insert to conditions that selectively remove any non-analyte components associated with the insert; and
exposing the insert to conditions that elute the analyte from the insert.

12. The method of any one of claims 9 to11, wherein the pipette tip extension device is contacted with a fluid comprising an analyte.

## Patentansprüche

1. Polymerpipettenspitzenaufsatzvorrichtung, die aufweist:
ein Polymergehäuse, das eine Außenfläche und eine Innenfläche aufweist, die einen ersten Hohlraum und einen zweiten Hohlraum definieren, die an entgegengesetzten Enden des Gehäuses angeordnet sind, wobei:
der Querschnitt des ersten Hohlraums und der Querschnitt des zweiten Hohlraums im wesentlichen kreisförmig und im wesentlichen parallel sind,
der Durchmesser des ersten Hohlraums größer als der Durchmesser des zweiten Hohlraums ist, und der Durchmesser des ersten Hohlraums und ein Abschnitt des Gehäuses,
der zum ersten Hohlraum benachbart ist, eingerichtet sind, über das Flüssigkeitsabgabeende einer Pipettenspitze zu passen; und
einen Einsatz, der mit einem Abschnitt der Innenfläche des Gehäuses in Kontakt steht, wobei der Einsatz mehrere Kapillarhohlräume aufweist und wobei Oberflächen, die die Kapillarhohlräume definieren, unter Analytwechselwirkungsbedingungen mit einem Analyt wechselwirken.

2. Vorrichtung nach Anspruch 1, die einen ringförmigen Vorsprung aufweist, der mit der Innenfläche der Gehäusewand koextensiv ist, und wobei sich ein Abschnitt des Einsatzes mit dem ringförmigen Vorsprung in Kontakt befindet.

3. Vorrichtung nach Anspruch 1 oder 2, wobei der Einsatz Glas, Ätzglas, geladenen oder ungeladenen Kunststoff, Ätzkunststoff oder ein Polymer aufweist.

4. Vorrichtung nach einem der Ansprüche 1 bis 3, wobei sich jeder Kapillarhohlraum innerhalb einer Kapillarröhre befindet.

5. Vorrichtung nach Anspruch 4, wobei der Einsatz ein Bündel oder eine Anordnung von Kapillarröhren aufweist.

6. Vorrichtung nach einem der Ansprüche 1 bis 5, wobei der Analyt im Gebrauch reversibel mit dem Einsatz verbunden ist.

7. Vorrichtung nach einem der Ansprüche 1 bis 6, wobei der Analyt eine Nukleinsäure, ein Polypeptid oder eine Zelle ist.

8. Vorrichtung nach einem der Ansprüche 1 bis 7, wobei das Volumen der Pipettenspitzenaufsatzvorrichtung von 0 bis 10 Mikroliter, 0 bis 20 Mikroliter, 1 bis 100 Mikroliter, 1 bis 200 Mikroliter oder von 1 bis 1000 Mikroliter reicht.

9. Verfahren zum Anbringen einer Pipettenspitzenaufsatzvorrichtung an einer Pipettenspitze, das aufweist:
in Kontakt bringen des Abschnitts des Gehäuses, der zum ersten Hohlraum der Pipettenspitzenaufsatzvorrichtung nach einem der Ansprüche 1 bis 5 benachbart ist, mit dem Flüssigkeitsabgabeende einer Pipettenspitze,
Anwenden von Druck zwischen der Pipettenspitze und der Pipettenspitzenaufsatzvorrichtung, und
optionales Drehen der Pipettenspitzenaufsatzvorrichtung bezüglich der Pipettenspitze;
wodurch das Pipettenspitzenaufsatzvorrichtungsgehäuse auf den Flüssigkeitsabgabeabschnitt der Pipettenspitze gesetzt wird.

10. Verfahren zum Verbinden eines Analyts mit einer Vorrichtung nach einem der Ansprüche 1 bis 8, das aufweist: in Kontakt bringen eines Analyts mit dem Einsatz der Vorrichtung unter Bedingungen, in denen sich der Analyt mit dem Einsatz verbindet.

11. Verfahren zum Isolieren eines Analyts mittels einer Vorrichtung nach einem der Ansprüche 1 bis 8, das aufweist:
in Kontakt bringen eines Analyts mit einer Vorrichtung nach einem der Ansprüche 1 bis 8 unter Bedingungen, in denen sich der Analyt mit dem Einsatz verbindet;
optionales Aussetzen des Einsatzes Bedingungen, die selektiv alle Nicht-Analyt-komponenten entfernen, die mit dem Einsatz verbunden sind; und
Aussetzen des Einsatzes Bedingungen, die den Analyt vom Einsatz eluieren.

12. Verfahren nach einem der Ansprüche 9 bis 11, wobei die Pipettenspitzenaufsatzvorrichtung mit einer Flüssigkeit in Kontakt gebracht wird, die einen Analyt aufweist.

## Revendications

1. Dispositif d'extension d'embout de pipette en polymère, comprenant :
un boîtier en polymère présentant une surface extérieure et une surface intérieure définissant un premier vide et un deuxième vide situés à des extrémités opposées du boîtier :
la section transversale du premier vide et la section transversale du deuxième vide étant sensiblement circulaires et sensiblement parallèles,
le diamètre du premier vide étant supérieur au diamètre du deuxième vide, et le diamètre du premier vide et une partie du boîtier contiguë au premier vide étant prévus pour recouvrir l'extrémité de refoulement de fluide d'un embout de pipette ; et
un insert en contact avec une partie de la surface intérieure du boîtier, ledit insert comprenant de multiples vides capillaires, et des surfaces définissant les vides capillaires interagissant avec une analyte dans des conditions d'interaction d'analyte.

2. Dispositif selon la revendication 1, comprenant une saillie annulaire coextensive à la surface intérieure de la paroi du boîtier, une partie de l'insert étant en contact avec ladite saillie annulaire.

3. Dispositif selon la revendication 1 ou la revendication 2, où l'insert comprend du verre, du verre dépoli, de la matière plastique chargée ou non chargée, de la matière plastique mate ou un polymère.

4. Dispositif selon l'une des revendications 1 à 3, où chaque vide capillaire est compris à l'intérieur d'un tube capillaire.

5. Dispositif selon la revendication 4, où l'insert comprend un faisceau ou un réseau de tubes capillaires.

6. Dispositif selon l'une des revendications 1 à 5, où, en cours d'utilisation, l'analyte est associée à l'insert de manière réversible.

7. Dispositif selon l'une des revendications 1 à 6, où l'analyte est un acide nucléique, un polypeptide ou une cellule.

8. Dispositif selon l'une des revendications 1 à 7, où le volume du dispositif d'extension d'embout de pipette est compris entre 0 et 10 microlitres, 0 et 20 microlitres, 1 et 100 microlitres, 1 et 200 microlitres ou entre 1 et 1000 microlitres.

9. Procédé de fixation d'un dispositif d'extension d'embout de pipette à un embout de pipette, comprenant les étapes suivantes :
mise en contact de la partie du boîtier contiguë au premier vide du dispositif d'extension d'embout de pipette selon l'une des revendications 1 à 5 avec l'extrémité de refoulement de fluide d'un embout de pipette,
application d'une pression entre l'embout de pipette et le dispositif d'extension d'embout de pipette, et
torsion facultative du dispositif d'extension d'embout de pipette par rapport à l'embout de pipette ;
le boîtier du dispositif d'extension d'embout de pipette étant mis en place sur la partie de refoulement de fluide de l'embout de pipette.

10. Procédé d'association d'une analyte avec un dispositif selon l'une des revendications 1 à 8, comprenant : la mise en contact d'une analyte avec l'insert du dispositif dans des conditions où l'analyte s'associe à l'insert.

11. Procédé d'isolation d'une analyte recourant à un dispositif selon l'une des revendications 1 à 8, comprenant les étapes suivantes :
mise en contact d'une analyte avec un dispositif selon l'une des revendications 1 à 8 dans des conditions où l'analyte s'associe à l'insert ;
exposition facultative de l'insert à des conditions supprimant sélectivement tout composant autre que l'analyte associé à l'insert ; et
exposition de l'insert à des conditions éluant l'analyte de l'insert.

12. Procédé selon l'une des revendications 9 à 11, où le dispositif d'extension d'embout de pipette est mis en contact avec un fluide contenant une analyte.
